# EUROPEAN PATENT SPECIFICATION

(11) **EP 3 757 953 B1**
(45) Date of publication and mention of the grant of the patent: **06.11.2024**
(21) Application number: 20153539.0
(22) Date of filing: 24.01.2020
(51) Int. Cl.: G07G 1/00, G07G 1/12

(54) **WIRELESS COMMUNICATION MODULE AND SYSTEM**
DRAHTLOSKOMMUNIKATIONSMODUL UND -SYSTEM
MODULE ET SYSTÈME DE COMMUNICATION SANS FIL

(30) Priority: 25.06.2019 JP 2019117847
(43) Date of publication of application: 30.12.2020
(73) Proprietor: Toshiba TEC Kabushiki Kaisha, Shinagawa-ku Tokyo 141-8562 (JP)
(72) Inventor: Katabira, Yasuhiro, Shinagawa-ku, Tokyo 141-8562 (JP)
(74) Representative: Bandpay & Greuter

(56) References cited:
- EP-A1- 3 051 477
- US-A1- 2004 143 770
- US-A1- 2011 254 668
- US-B1- 6 389 544

## Description

### FIELD

Embodiments described herein relate generally to a wireless communication module and a system, and methods related thereto.

### BACKGROUND

In the related art, a money receiving and dispensing apparatus such as a change machine is used together with a sales data processing apparatus such as a POS terminal apparatus. The change machine is accommodated in a lower portion of a rack on which the POS terminal apparatus is mounted and so forth. Furthermore, the change machine is connected to the POS terminal apparatus in a wired manner. Moreover, for operation, the change machine receives electric power supply separately from the POS terminal apparatus. For this reason, a service person takes pains to lay out cable runs in order not for cables to be exposed in an unsightly sprawl from the rack.

The problem as described above is solved by connecting the change machine and the POS terminal apparatus in a manner that enables wireless communication with each other (for example, JP-A-2016-143153 and JP-A-2013-250802), but there remains the following problem with this technique.

In the normal state, the change machine in the related art operates under the control of the POS terminal apparatus, and, also when powered on or off, operates under the control of the POS terminal apparatus. Furthermore, the change machine in the related art receives electric power supply separately from the POS terminal apparatus for operation, more precisely, operates by electric power of which supply is different from supply of electric power to the POS terminal apparatus. For this reason, if the change machine reaches a state of not being under the control of the POS terminal apparatus, and is thus desired to be powered off and restart up, there is a need to directly physically operate a power source switch of the change machine.

However, this operation is a job that is performed by the service person who makes a visit to the change machine, or is a job that is performed by a sales person according to an instruction from the service person. Thus, this operation is performed with long downtime or is complex, so is not preferable.

As described above, the money receiving and dispensing apparatus is described that is used together with the sales data processing apparatus, but the same problem occurs in peripheral equipment that is used together with the information processing apparatus.

### DESCRIPTION OF THE DRAWINGS

FIG. 1 is a perspective diagram illustrating external appearances of a POS terminal apparatus and a change machine that are included in a system according to an embodiment.
FIG. 2 is a diagram for briefly describing a connection between the POS terminal apparatus and the change machine.
FIG. 3 is a block diagram illustrating a configuration of the POS terminal apparatus.
FIG. 4 is a block diagram illustrating a configuration of the change machine.
FIG. 5-1 is a block diagram illustrating a configuration of a short-distance wireless module that is attached to the change machine.
FIG. 5-2 is a block diagram illustrating a configuration of a short-distance wireless module that is attached to the POS terminal apparatus.
FIG. 6 is a diagram illustrating a flow for processing that is performed by each unit that makes up a system according to the present embodiment.
FIG. 7 is a diagram illustrating a configuration of a system in a modification example of the embodiment.
FIG. 8 is a perspective diagram illustrating an external appearance of a commodity data registration apparatus.
FIG. 9 is a perspective diagram illustrating an external appearance of an apparatus that is used as an accounting apparatus or a self-service checkout apparatus.
FIG. 10 is a diagram for schematically describing a connection between the accounting apparatus and the change machine.
FIG. 11 is a diagram for schematically describing a connection between the self-service checkout apparatus and the change machine.

### DETAILED DESCRIPTION

The invention is set out in the appended set of claims.

A beneficial aspect of the exemplary embodiment is to enable an operation of powering off and on peripheral equipment operating under the control of an information processing apparatus to be performable even in a state where the peripheral equipment is not under the control.

According to an aspect of the exemplary embodiment, there is provided a wireless communication module that is attached to peripheral equipment that is used together with an information processing apparatus and operates by electric power of which supply is different from supply of electric power to the information processing apparatus, the module including: a wireless communication unit configured to enable wireless communication between the information processing apparatus and the peripheral equipment; and a power source control processing unit configured to transmit a control signal that causes a circuit which receives electric power supply to be switched from one of an open state and a closed state to the other, to the peripheral equipment, according to a request that is received from the information processing apparatus. According to another aspect, a wireless communication method involves wirelessly communicating between an information processing apparatus and a peripheral equipment, the peripheral equipment is operated by electric power of which a supply is different from a supply of electric power to the information processing apparatus; and
transmitting a control signal that causes a circuit which receives the supply of electric power to be switched from one of an open state and a closed state to the other, to the peripheral equipment, according to a request that is received from the information processing apparatus.

The wireless communication module further comprises a storage unit configured to store a setting for the peripheral equipment, which relates to cooperation with the information processing apparatus; and a setting transmission unit configured to transmit the setting to the peripheral equipment, wherein the wireless communication module is removably attached to the peripheral equipment through a wired connection.

Preferably, the wireless communication module is a short distance wireless communication module.

Preferably, the wireless communication module is configured to communicate sales data processing information to the peripheral equipment.

The present invention further relates to a system, comprising:
peripheral equipment that is used together with an information processing apparatus; and a wireless communication module.

The information processing apparatus is a POS terminal, preferably having a supply of electric power different from a supply of electric power to the peripheral equipment.

Preferably, the wireless communication module is attached to a money receiving and dispensing apparatus that is used together with a sales data processing apparatus registering a sale of a commodity and receives and dispenses at least one of a bill and a coin according to an output signal of the sales data processing apparatus.

Preferably, the money receiving and dispensing apparatus is a change machine.

The information processing apparatus is a POS terminal.

Preferably, the wireless communication module is configured to communicate sales data processing information from the information processing apparatus to the peripheral equipment.

The present invention further relates to a wireless communication method, comprising: wirelessly communicating between an information processing apparatus and a peripheral equipment, the peripheral equipment is operated by electric power of which a supply is different from a supply of electric power to the information processing apparatus; and transmitting a control signal that causes a circuit which receives the supply of electric power to be switched from one of an open state and a closed state to the other, to the peripheral equipment, according to a request that is received from the information processing apparatus.

The wireless communication method further comprises:
storing a setting for the peripheral equipment, which relates to cooperation with the information processing apparatus; and
transmitting the setting to the peripheral equipment.

The wireless communication method may further comprise: registering a sale of a commodity and receiving and dispensing at least one of a bill and a coin according to an output signal of a sales data processing apparatus.

Preferably, wirelessly communicating between the information processing apparatus and the peripheral equipment comprises using short distance wireless communication methods.

The wireless communication method may further comprise communicating sales data processing information to the peripheral equipment.

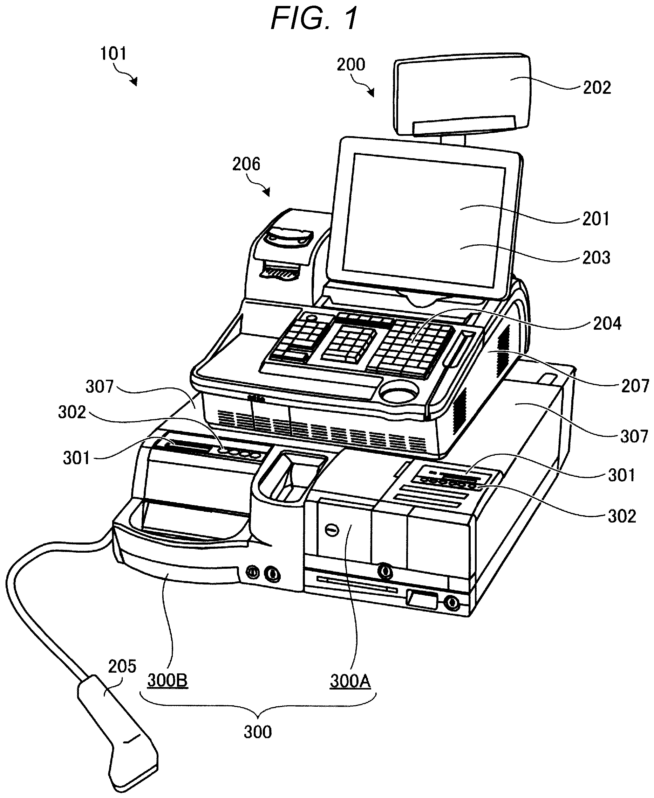

Embodiments will be described with reference to the drawings. FIG. 1 is a perspective diagram illustrating external appearances of a point-of-sales (POS) terminal apparatus 200 and a change machine 300 that are included in a system 101 according to the present embodiment.

The POS terminal apparatus 200 is an example of a sales data processing apparatus that registers a sale of a commodity. The sales data processing apparatus is an example of an information processing apparatus. The change machine 300 is an example of a money receiving and dispensing apparatus that receives and dispenses at least one of a bill and a coin according to an output signal of the sales data processing apparatus. The money receiving and dispensing apparatus is an example of peripheral equipment that is used together with the information processing apparatus.

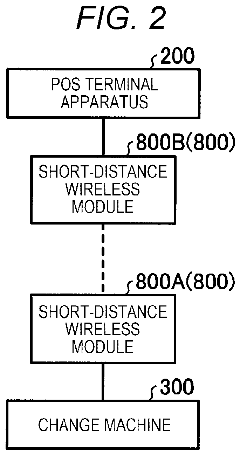

FIG. 2 is a diagram for briefly describing a connection between the POS terminal apparatus 200 and the change machine 300. In the present embodiment, the POS terminal apparatus 200 and the change machine 300 wirelessly communicate with each other through short-distance wireless modules 800A and 800B. The short-distance wireless modules 800A and 800B are examples of a wireless communication module and are essential units of the system 101.

The short-distance wireless module 800A is removably attached to the change machine 300 through a wired connection. The short-distance wireless module 800B is removably attached to the POS terminal apparatus 200 through a wired connection. Then, the short-distance wireless module 800A and the short-distance wireless module 800B wirelessly transmit and receive a signal to and from each other. Accordingly, a wireless connection is realized between the POS terminal apparatus 200 and the change machine 300.

It is noted that, as long as there is no need to distinguish between the short-distance wireless modules 800A and 800B, the short-distance wireless modules 800A and 800B are expressed as simply a short-distance wireless module 800.

Electric power for operation is provided individually to the POS terminal apparatus 200 and the change machine 300. More precisely, the change machine 300 operates by electric power of which supply is different from supply of electric power to the POS terminal apparatus 200.

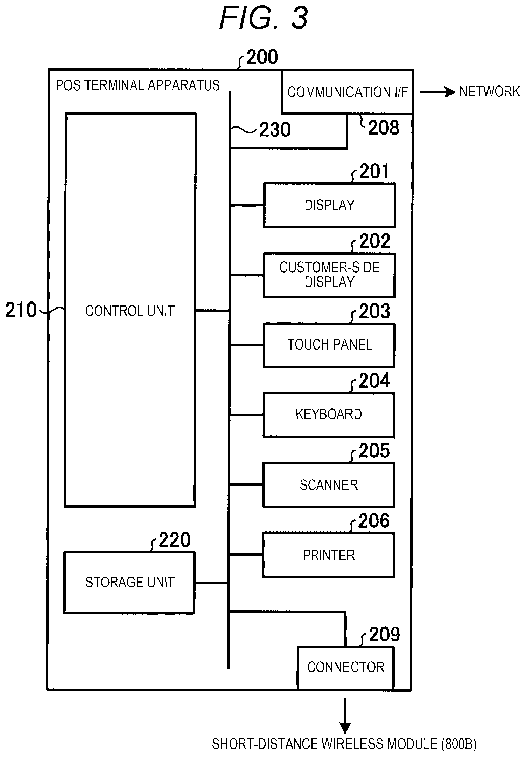

FIG. 3 is a block diagram illustrating a configuration of the POS terminal apparatus 200. The configuration of the POS terminal apparatus 200 is described with reference to FIGs. 1 and 3. The POS terminal apparatus 200, as illustrated in FIG. 1, includes a display 201, a customer-side display 202, a touch panel 203, a keyboard 204, a scanner 205, a printer 206, and a casing 207. Moreover, the POS terminal apparatus 200, as illustrated in FIG. 3, includes a communication interface (I/F) 208, a connector 209, a control unit 210, and a storage unit 220. Except for the casing 207, these units are connected to each other with the bus line 230 in a manner that possibly transmits and receives a signal.

The communication I/F 208 or the connector 209 is provided to the casing 207, and the control unit 210 and the storage unit 220 are accommodated within the casing 207.

Under the control of the control unit 210, various pieces of information destined for a sales person who is an operator of the POS terminal apparatus 200 are displayed on the display 201 that is provided on the casing 207. Under the control of the control unit 210, various pieces of information destined for a customer who faces the operator are displayed on the customer-side display 202.

The touch panel 203 is provided on a surface of the display 201 in a superimposed manner. An operation in accordance with content that is displayed on the display 201 is applied, as an input, by touching on the touch panel 203, and a signal of the operation that is applied is transferred to the control unit 210. The keyboard 204 is provided on a front-side upper surface of the casing 207, and a signal of an operation that is applied, as an input, by striking many physical keys provided on the keyboard 204 is transferred to the control unit 210.

The scanner 205 obtains code information by reading and decoding a symbol image such as a barcode and outputs the obtained code information. The code information that is obtained by decoding the symbol image attached to a commodity is, for example, information, such as a JAN code, that possibly specifies the commodity. The printer 206 prints and dispenses a piece of paper, such as a receipt, on which information on a commodity that is purchased is described for each transaction.

The communication I/F 208 communicates with an apparatus (a server for a store or a different POS terminal apparatus within the store) that is connected through a prescribed network. The network, for example, is a local area network (LAN) within the store or is a dedicated line.

The connector 209 is a socket into which to insert an end of a cable that connects to the short-distance wireless module 800B in a wired manner.

The control unit 210 is configured with a central processing unit (CPU), a read only memory (ROM), a random access memory (RAM), and the like and generally controls each of the units that make up the POS terminal apparatus 200. The control unit 210 functions as various functional units by the CPU executing a program that is stored in the ROM.

The storage unit 220, for example, is a storage device such as a hard disk drive or a solid state drive (SDD). The storage unit 220 stores various programs that are executable by the control unit 210, setting information, and the like. Furthermore, the storage unit 220 stores basic commodity information or sales data.

To obtain the basic commodity information, pieces of information on each commodity, such as a Japanese article number (JAN) code that is indicated by a symbol image such as a barcode attached to the commodity, a name of the commodity, a price (unit price) of the commodity, and a categorization code, are determined in a manner that is associated with a commodity code (a commodity identification information) of the commodity that is a sale registration target. The sales data is information that is described on a receipt that is dispensed each time transaction occurs, and includes at least a price of the purchased commodity, a total amount of payment, information on discount or price reduction if any, and a coupon given due to the transaction.

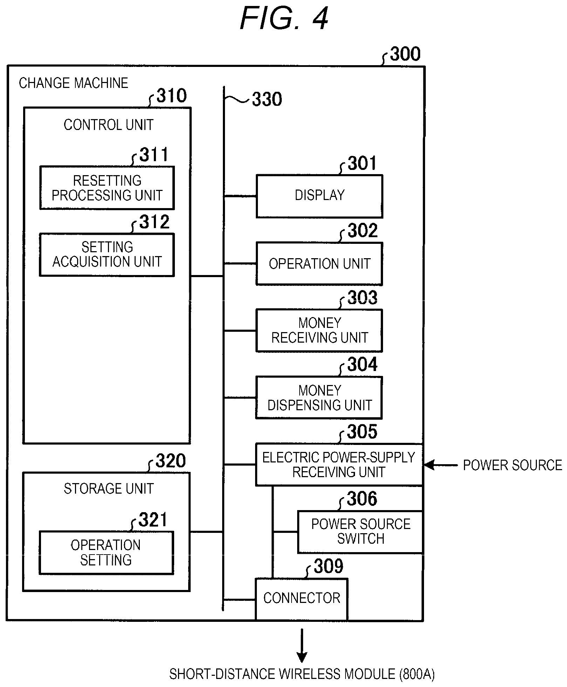

FIG. 4 is a block diagram illustrating a configuration of the change machine. The configuration of the change machine 300 is described with reference to FIGs. 1 and 4. The change machine 300 according to the present embodiment, as illustrated in FIG. 1, is configured with a bill change machine 300A and a coin change machine 300B. In FIG. 4, it is illustrated that the change machine 300 has the same configuration as both (the bill change machine 300A and the coin change machine 300B).

The change machine 300 (the bill change machine 300A and the coin change machine 300B) includes a display 301, an operation unit 302, a money receiving unit 303, a money dispensing unit 304, an electric power-supply receiving unit 305, a power source switch 306, a casing 307, a connector 309, a control unit 310, and a storage unit 320. Except for the casing 307, these units are connected to each other with a bus line 330 in a manner that possibly transmits and receives a signal.

The display 301, the operation unit 302, the electric power-supply receiving unit 305, the power source switch 306, and the connector 309 are provided to the casing 307. On the other hand, the money receiving unit 303, the money dispensing unit 304, the control unit 310, and the storage unit 320 are accommodated within the casing 307. Under the control of the control unit 310, various pieces of information destined for an operator of the change machine 300 are displayed on the display 301. A signal of an operation that is applied, as an input, by striking physical keys on the operation unit 302 is transferred to the control unit 310.

Under the control of the control unit 310, the money receiving unit 303 receives a bill or a coin, and the received bill or coin is stored in the casing 307. Under the control of the control unit 310, the money dispensing unit 304 carries the bill or coin within the casing 307 out of the casing 307.

The electric power-supply receiving unit 305 includes a connector into which an end of a power supply cable is inserted, and receives electric power supply from a power supply unit by way of the power supply cable and supplies the supplied electric power to each of the units.

By being manually operated by the operator, the power source switch 306 causes the electric power-supply receiving unit 305 to operate. Thus, a circuit for electric power supply by the electric power-supply receiving unit 305 switches from one of a closed state and an open state to the other. It is noted that the closed state of the circuit for power supply is in an electrically conducted state, more precisely, in a powered-on state. Furthermore, the opened state of the circuit for power supply is in a disconnected (or electrically non-conducted) state, more precisely, a powered-off state.

The connector 309 is a socket into which to insert an end of a cable that connects to the short-distance wireless module 800A in a wired manner. Furthermore, the connector 309 is connected to the bus line 330 and in addition, is joined to a circuit from the power source switch 306 to the electric power-supply receiving unit 305. Thus, the connector 309 is connected to the electric power-supply receiving unit 305. The control unit 310 is configured with a CPU, a ROM, a RAM, and the like, and generally controls each of the units that make up the change machine 300. The control unit 310 functions as various functional units (a resetting processing unit 311, the setting acquisition unit 312, and the like) by the CPU executing a program that is stored in the ROM.

The storage unit 320 is a storage device, such as an HDD or an SSD. The storage unit 320 stores various programs that are executable by the control unit 310, setting information, and the like. Furthermore, the storage unit 320 stores an operation setting 321 for the change machine 300.

The operation setting 321 is received from the short-distance wireless module 800A. The operation setting 321 is initial setting data and a setting for the change machine 300, which relates to cooperation with the POS terminal apparatus 200. The setting is necessarily performed if the change machine 300 is introduced or replaced.

The change machine 300 needs an initial setting in order to communicate with the POS terminal apparatus 200 or to perform an operation (for example, receiving and dispensing money) in cooperation with the POS terminal apparatus 200. In the related art, the initial setting is performed on each apparatus by a service person who connects the change machine 300 to the POS terminal apparatus 200 in a wired manner, by connecting a personal computer (PC) to the change machine 300 and so forth. However, because this operation is complex and takes time to perform, it is desirable that the operation is simplified. According to the present embodiment, in this respect, an improvement is also performed. That is, a configuration is employed in such a manner that the initial setting data is acquired from the short-distance wireless module 800A that is connected by way of the connector 309.

If a resetting instruction from the POS terminal apparatus 200 is received by way of the connector 309 and the short-distance wireless module 800, the resetting processing unit 311 resets the change machine 300. It is noted that the resetting here is restarting-up, that is, restarting-up without powering-off.

The setting acquisition unit 312, for example, operates when the change machine 300 starts up, and acquires an operation setting from the short-distance wireless module 800A and stores the acquired operation setting, as the operation setting 321, in the storage unit 320.

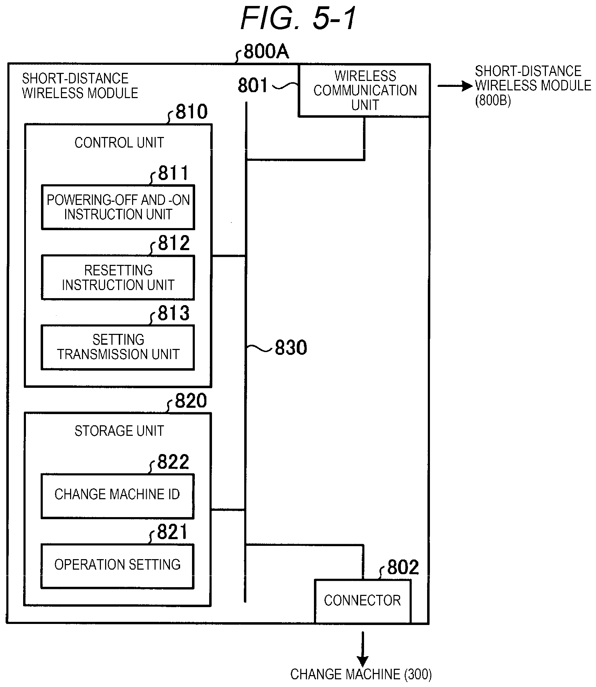

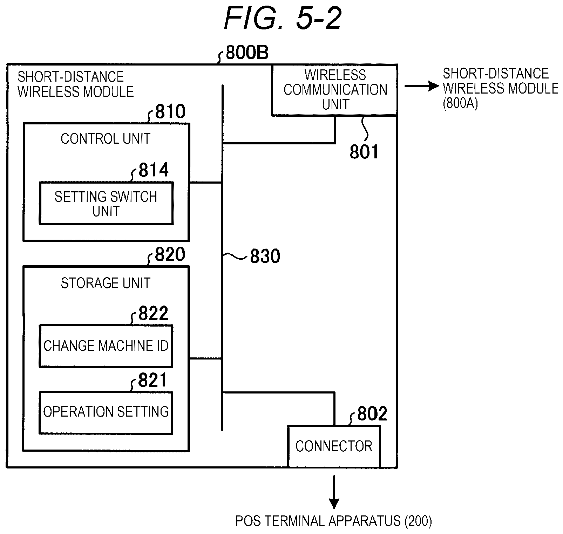

Next, a configuration of the short-distance wireless module 800 (800A and 800B) will be described. FIG. 5-1 is a block diagram illustrating a configuration of the short-distance wireless module 800A that is attached to the change machine 300. Furthermore, FIG. 5-2 is a block diagram illustrating a configuration of the short-distance wireless module 800B that is attached to the POS terminal apparatus 200.

The short-distance wireless module 800 (800A and 800B), for example, is realized by a printed circuit board (PCB) that results from mounting electronic components on a printed board, and includes a wireless communication unit 801, a connector 802, a control unit 810, and a storage unit 820. These units are connected to each other with a bus line 830 in a manner that possibly transmits and receives a signal.

The connector 802 is a socket into which to insert an end of a cable that connects to the change machine 300 or the POS terminal apparatus 200 in a wired manner. The wireless communication unit 801 realizes short-distance wireless communication with the short-distance wireless modules 800.

The control unit 810 is configured with a CPU, a ROM, a RAM, and the like, and generally controls each of the units that make up the short-distance wireless module 800. The control unit 810 functions as various functional units by the CPU executing a program that is stored in the ROM.

The storage unit 820 is a storage device such as a flash ROM. The storage unit 820 stores various programs that are executable by the control unit 810, firmware, setting information, and the like. Furthermore, the storage unit 820 stores an operation setting 821 for and a change machine ID 822 of the change machine 300.

The operation setting 821 has the same contents as the operation setting 321 that the storage unit 320 of the change machine 300 stores, and a setting for the change machine 300, which relates to the cooperation with the POS terminal apparatus 200. The change machine ID 822 is identification data on the change machine 300 that is connected to the short-distance wireless module 800A in a wired manner. The change machine ID 822 is acquired from the change machine 300 at a prescribed timing such as when the change machine 300 starts up, and the acquired change machine ID 822 is stored. Referring to the change machine ID 822, the POS terminal apparatus 200 identifies a neighboring apparatus that communicates by way of the connector 209, as the change machine 300.

The control unit 810 of the short-distance wireless module 800A functions as a powering-off and -on instruction unit 811, a resetting instruction unit 812, a setting transmission unit 813, and the like, by executing a prescribed program.

The powering-off and -on instruction unit 811 is an example of a power source control processing unit, and, according to a request (a command) that is received from the POS terminal apparatus 200, transmits a power source control command to the change machine 300. The power source control command is a control signal that causes a circuit that receives electric power supply to be switched from one of an open state and a closed state to the other.

If the wireless communication unit 801 receives the resetting instruction (the command) from the POS terminal apparatus 200 through the short-distance wireless module 800B, the resetting instruction unit 812 transmits the command, that is, the resetting instruction, to the change machine 300, by way of the connector 802.

The resetting instruction is not received when the change machine 300 is in a locked state. The locked state, for example, is a state where an instruction is not received from the outside and where there is no response, such as a state where processing goes into an endless loop and where a next instruction is not received. For this state to return to a normal state, there is a need to restart up after a power source is temporarily turned off (turning off and on the power source).

The setting transmission unit 813 transmits the operation setting 821 to the change machine 300.

The control unit 810 of the short-distance wireless module 800B functions as a setting switch unit 814 or the like by executing a prescribed program. The setting switch unit 814 rewrites the operation setting 821 that the storage unit 820 stores, by receiving a setting update instruction by way of the POS terminal apparatus 200 (or an external apparatus such as a PC).

Furthermore, by receiving a signal of a prescribed operation that is applied by way of the POS terminal apparatus 200 (or an external apparatus such as a PC), it is possible that the control unit 810 performs an update on firmware, various programs, setting information, and the like that the storage unit 820 stores.

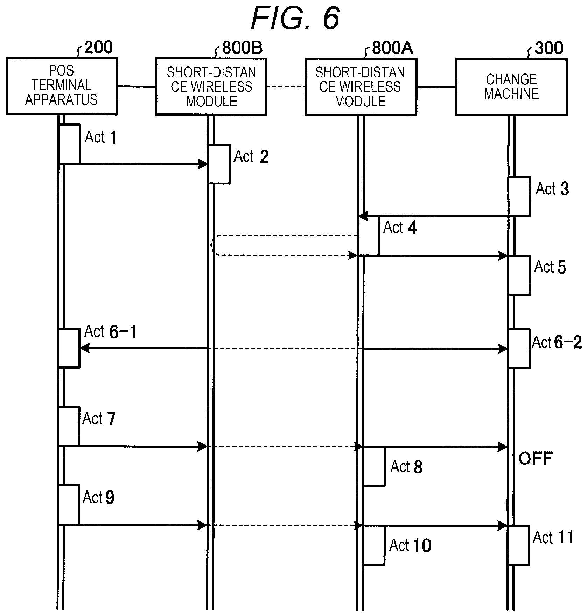

FIG. 6 is a diagram illustrating a flow for processing that is performed by each of the units that make up the system 101 according to the present embodiment. By an operation by the service person, the control unit 210 of the POS terminal apparatus 200 transmits the setting update instruction for instructing that the operation setting 821 is rewritten which is stored in the short-distance wireless module 800B which is connected in a wired manner by way of the connector 209 (Act 1). When receiving the setting update instruction by way of the connector 802, the control unit 810, as the setting switch unit 814, of the short-distance wireless module 800B performs an update on the operation setting 821 (Act 2).

The change machine 300, when is powered on to start up, requests the short-distance wireless module 800A, which is connected in a wired manner by way of the connector 309, to provide the operation setting 821 (Act 3). The control unit 810 of the short-distance wireless module 800A that receives this request requests the short-distance wireless module 800B to transmit the operation setting 821 by way of the wireless communication unit 801, and not only updates the storage unit 820 with the received operation setting 821, but also transmits a new operation setting 821 to the change machine 300 (Act 4). The setting acquisition unit 312 of the change machine 300 that receives the operation setting from the short-distance wireless module 800A performs an update on the operation setting 321 (Act 5).

The POS terminal apparatus 200 and the change machine 300 performs communication pertaining to sales data processing with each other. For example, the communication pertains to a money receiving and dispensing instruction from the POS terminal apparatus 200 to the change machine 300, contact for notification of outstanding balance and a report on occurrence of an error from the change machine 300 to the POS terminal apparatus 200, polling (periodic inquiry), and others (Acts 6-1 and 6-2).

When communication fails in Act 6 (Acts 6-1 and 6-2), the control unit 210 of the POS terminal apparatus 200 regards this as an abnormal state where it is impossible for the change machine 300 to perform communication, and thus first transmits the resetting instruction to the change machine 300. Although the control unit 210 of the POS terminal apparatus 200 waits a prescribed time after the transmission is performed, if the communication is not resumed, the control unit 210 transmits a signal requesting powering-off to the short-distance wireless module 800B (Act 7). The control unit 810 of the short-distance wireless module 800B that receives the signal requesting the powering-off transfers the received signal to the short-distance wireless module 800A. Then, the control unit 810, as the powering-off and -on instruction unit 811, of the short-distance wireless module 800A to which the signal requesting the powering-off is transferred transmits the power source control command to the change machine 300 that is connected in a wired manner by way of the connector 802 (Act 8). The power source control command is a control signal that causes a circuit that receives electric power supply to be switched from one of the open state and the closed state to the other, and is a signal that is the same as a signal that is input into the electric power-supply receiving unit 305 if the power source switch 306 operates. When the power source control command is input from the connector 309 and reaches the electric power-supply receiving unit 305, the change machine 300 is powered off.

When a prescribed time elapsed after Act 7 is performed, the control unit 210 of the POS terminal apparatus 200 transmits a signal requesting starting-up to the short-distance wireless module 800B (Act 9). The control unit 810 of the short-distance wireless module 800B that receives the signal requesting the starting-up transfers the received signal to the short-distance wireless module 800A. Then, the control unit 810, as the powering-off and -on instruction unit 811, of the short-distance wireless module 800A to which the signal requesting the starting-up is transferred transmits the power source control command to the change machine 300 that is connected in a wired manner by way of the connector 802 (Act 10). When the power source control command is input from the connector 309 and then reaches the electric power-supply receiving unit 305, the change machine 300 starts up (Act 11). It is noted that Act 11 is the same as Act 3.

As described above, in the present embodiment, a configuration is employed in which a signal from the control unit 810 that operates independently of the control unit 310 of the change machine 300 and operates according to an instruction of the POS terminal apparatus 200 is input into a circuit from the power source switch 306 of the change machine 300 to the electric power-supply receiving unit 305. With this configuration, the power source control command that is issued by the control unit 810 is input into the electric power-supply receiving unit 305. Thus, although the control unit 310 of the change machine 300 enters a state where there is no response, under the control of the POS terminal apparatus 200, the change machine 300 can be powered off or on without manually operating the power source switch 306. More precisely, an operation of powering off and on the change machine 300 that operates under the control of the POS terminal apparatus 200 can be performable even in a state where the change machine 300 is not under the control.

Furthermore, in the present embodiment, a configuration is employed in which the change machine 300 and the POS terminal apparatus 200 possibly communicate with each other by making a wireless connection. Accordingly, the change machine 300 can be more easily installed than in the related art.

Furthermore, in the present embodiment, a configuration is employed in which the operation setting for the change machine 300 is retained in the short-distance wireless module 800 and in which the change machine 300 possibly acquires the operation setting suitably. Accordingly, for example, if the change machine 300 is replaced and so forth, the short-distance wireless module 800A that is connected to the pre-replacement change machine 300 is detached and is then connected to the post-replacement change machine 300. Thus, the operation setting for the post-replacement change machine 300 can be finished.

Furthermore, in the present embodiment, a configuration is employed in which an update or a firmware update on the operation setting for the change machine 300 is possible from the POS terminal apparatus 200 or an external apparatus such as a PC. Accordingly, it is possible that an appropriate action is taken to perform an update on a software version of the change machine 300 or the POS terminal apparatus 200.

It is noted that in the embodiment described above, a configuration is employed in which the short-distance wireless module 800B is connected to the POS terminal apparatus 200, but that in implementation, a configuration may be employed in which the POS terminal apparatus 200 includes a functional unit that is equivalent to the short-distance wireless module 800B.

Furthermore, in the embodiment described above, the control unit 810 of the short-distance wireless module 800A is set to function as the powering-off and -on instruction unit 811, the resetting instruction unit 812, and the setting transmission unit 813, and the control unit 810 of the short-distance wireless module 800B is set to function as the setting switch unit 814. However, in implementation, no limitation to this functioning is imposed. For example, the powering-off and -on instruction unit 811, the resetting instruction unit 812, the setting transmission unit 813, and the setting switch unit 814 may be provided in each of the control unit 810 of the short-distance wireless module 800A and the control unit 810 of the short-distance wireless module 800B. More precisely, the short-distance wireless module 800A and the short-distance wireless module 800B may be shared. In this instance, the setting switch unit 814 is not used in the short-distance wireless module 800 that is used as the short-distance wireless module 800A, and the powering-off and -on instruction unit 811, the resetting instruction unit 812, and the setting transmission unit 813 are not used in the short-distance wireless module 800 that is used as the short-distance wireless module 800B.

### Modification Example

Next, a modification example of the embodiment described above will be described. In the modification example, a unit described, or the same unit as, in the embodiment described above is given the same reference character, and a detailed description thereof is not repeated.

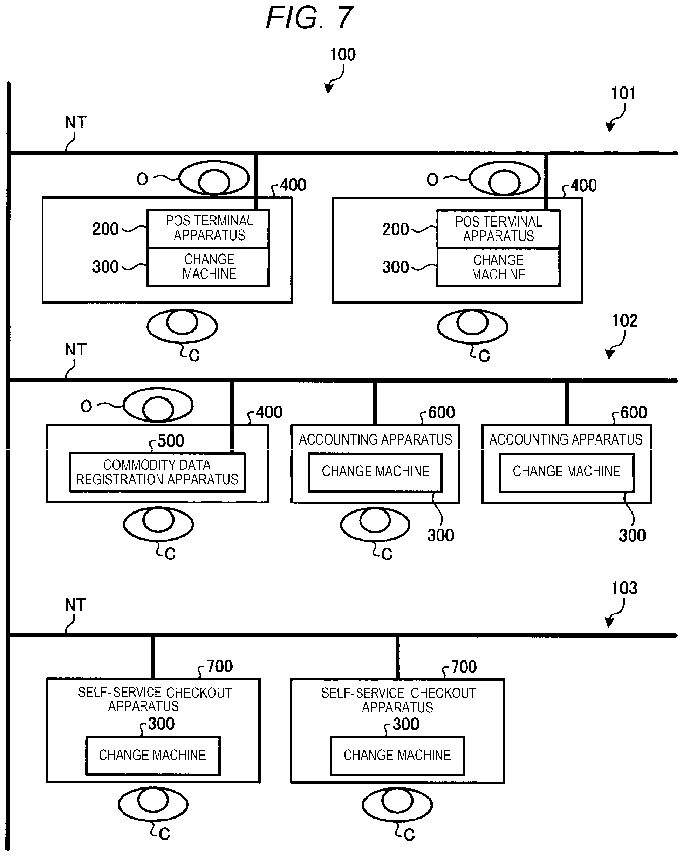

FIG. 7 is a diagram illustrating a configuration of a system 100 in the modification example of the embodiment. The system 100 includes a system 102 and a system 103 in addition to the system 101 according to the embodiment, which is described above.

The system 101 is a system for checkout (registration of a sale of a commodity and payment) using the POS terminal apparatus 200 and the change machine 300 whose operator is a sales person. The system 102 is a system for semi-self-service checkout. The system 103 is a system for self-service checkout. The semi-self-service checkout is a method in which a sale is registered by the sales person and in which payment is made by a customer. The self-service checkout is a method in which a customer both registers a sale and makes payment.

The system 101 has a configuration in which checkout counters 400, on each of which the POS terminal apparatus 200 and the change machine 300, are mounted are lined up with each other, one after another. In the system 101, an operator O who is a sales person and a customer C face each other with the checkout counter 400 in between.

The system 102 has a configuration in which the checkout counter 400 on which a commodity data registration apparatus 500 is mounted, and an accounting apparatus 600 are lined up with each other, one after another. In the system 102, the operator O and the customer C face each other with the checkout counter 400 in between. After the operator O finishes registration of a sale of a commodity using the commodity data registration apparatus 500, the customer C moves toward the accounting apparatus 600 and pays for the commodity of which the sale is registered, that is, makes payment of an amount of money for the commodity.

The system 103 has a configuration in which self-service checkout apparatuses 700 are lined up with each other, one after another. Basically, the operator O is not present at the system 103. Thus, the customer C moves toward the self-service checkout apparatus 700 and registers the sale and makes payment.

The apparatuses (the POS terminal apparatus 200, the commodity data registration apparatus 500, the accounting apparatus 600, and the self-service checkout apparatus 700) are connected through a network NT in a manner that possibly communicates with each other. The network NT, for example, is a LAN that is installed within a store.

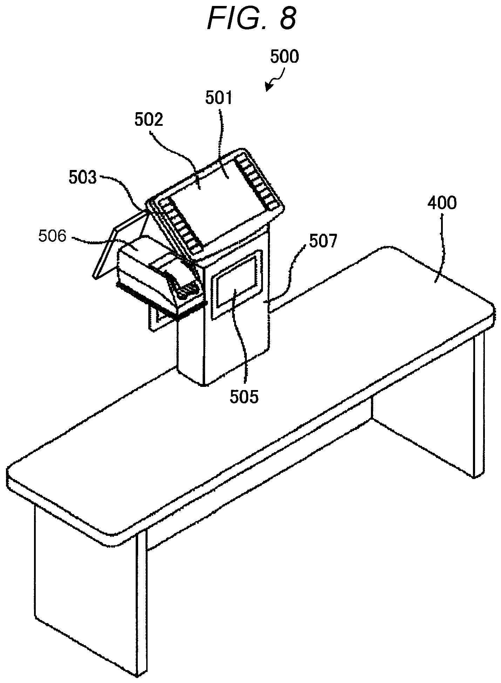

FIG. 8 is a perspective diagram illustrating an external appearance of the commodity data registration apparatus 500. The commodity data registration apparatus 500 is a so-called vertical-type scanner, and includes a display unit 501, a touch panel 502, a keyboard 503, a scanner 505, a printer 506, a casing 507, and the like. A control unit or a storage unit is accommodated within the casing 507.

The scanner 505 reads a barcode attached to a commodity and so forth, and thus the commodity data registration apparatus 500 in the system 102 registers a sale of the commodity. Furthermore, the commodity data registration apparatus 500 transmits sales data, which is registered, to the accounting apparatus 600 by way of the network NT.

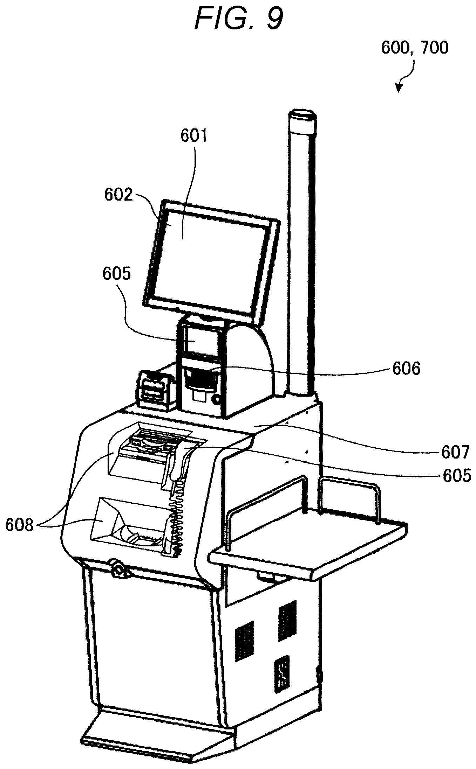

FIG. 9 is a perspective diagram illustrating an external appearance of an apparatus that is used as the accounting apparatus 600 and the self-service checkout apparatus 700. The accounting apparatus 600 (the self-service checkout apparatus 700) includes a display unit 601, a touch panel 602, a scanner 605, a printer 606, a casing 607, and the like. A control unit and storage unit, or a money receiving and dispensing apparatus is accommodated within the casing 607. A money receiving and dispensing slot 608 through which the money receiving and dispensing apparatus receives and dispenses a bill or a coin is provided in the casing 607.

In the system 102, the accounting apparatus 600 makes settlement that is based on the sales data received from the commodity data registration apparatus 500, using the money receiving and dispensing apparatus. Furthermore, in the system 103, the scanner 605 reads a barcode attached to a commodity, and so forth, and thus the self-service checkout apparatus 700 registers a sale and makes settlement using the money receiving and dispensing apparatus.

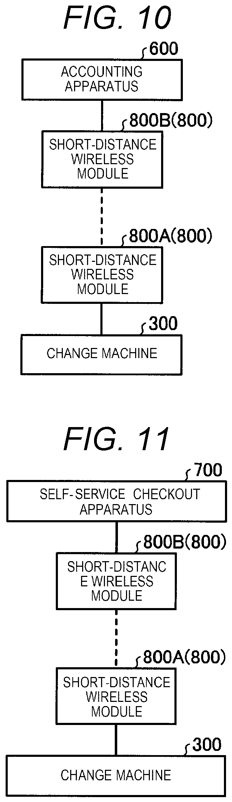

FIG. 10 is a diagram for schematically describing a connection between the accounting apparatus 600 and the change machine 300. In the same manner as in the embodiment described above, the change machine 300 is connected to the short-distance wireless module 800A in a wired manner. Furthermore, the short-distance wireless module 800B is connected to the accounting apparatus 600 in a wired manner. Accordingly, the accounting apparatus 600 and the change machine 300 are connected wirelessly through the short-distance wireless modules 800A and 800B, and possibly transmit and receive a signal to and from each other.

FIG. 11 is a diagram for schematically describing a connection between the self-service checkout apparatus and the change machine. In the same manner as in the embodiment described above, the change machine 300 is connected to the short-distance wireless module 800A in a wired manner. Furthermore, the short-distance wireless module 800B is connected to the self-service checkout apparatus 700 in a wired manner. Accordingly, the self-service checkout apparatus 700 and the change machine 300 are connected wirelessly through the short-distance wireless modules 800A and 800B, and possibly transmit and receive a signal to and from each other.

With the configuration described above, in the system 100, principal information processing apparatuses (the POS terminal apparatus 200, the accounting apparatus 600, and the self-service checkout apparatus 700) and peripheral equipment (the change machine 300) are connected wirelessly in a manner that communicates with each other, and although the peripheral equipment is in the locked state, by transmitting the power source control command from the principal information processing apparatus, the peripheral equipment can be powered off and be caused to restart up.

Furthermore, in the system 100 as described above, the short-distance wireless module 800B may be set to be included in any information processing apparatus (the POS terminal apparatus 200, the accounting apparatus 600, or the self-service checkout apparatus 700), and may be configured in such a manner that one short-distance wireless module 800B communicates wirelessly with multiple short-distance wireless modules 800A.

In this instance, among the principal information processing apparatuses, the power source control command that is issued by an apparatus (which is assumed to be an apparatus on the transmitting side) to which the short-distance wireless module 800B is not connected is set to be transferred to the information processing apparatus (which is assumed to be a relay apparatus) to which the short-distance wireless module 800B is connected by way of the network NT. In order to do this, the power source control command is transmitted from the short-distance wireless module 800B that is connected to the relay apparatus, to target peripheral equipment (an apparatus on the receiving side).

Accordingly, the need to provide the short-distance wireless module 800B to all the principal information processing apparatuses can be removed and a cost reduction can be achieved.

It is noted that in the embodiment and the modification example, which are described above, the change machine 300 is expressed as an example of the peripheral equipment, but in implementation, the peripheral equipment may be any other apparatus without being limited to the change machine 300. In the same manner, in the embodiment and the modification example, which are described above, the sales data processing apparatus such as the POS terminal apparatus 200 is expressed as an example of the information processing apparatus, but in implementation, the information processing apparatus may be any other apparatus without being limited to the sales data processing apparatus.

Furthermore, in the embodiment and the modification example, which are described above, the short-distance wireless module 800A is preferentially connected to the change machine 300 in a removably attached manner. However, in implementation, regarding powering-on and -off control, the short-distance wireless module 800A may not be removably attached to the change machine 300, and the change machine 300 may include the short-distance wireless module 800A (may function as the short-distance wireless module 800A).

It is noted that a program that is executed in the short-distance wireless module 800 according to the present embodiment is provided in a state of being in advance stored in a flash ROM or the like.

The program that is executed in the short-distance wireless module 800 according to the present embodiment may be configured in such a manner that the program is provided in a state of being recorded, in the installable or executable file format, in a computer-readable recording medium, such as a CD-ROM, a flexible disk (FD), a CD-R, or a digital versatile disk (DVD).

Moreover, the program that is executed in the short-distance wireless module 800 according to the present embodiment may be configured to be provided in such a manner that the program is stored on a computer connected to a network such as the Internet and is downloaded by way of the network. Furthermore, the program that is executed in the short-distance wireless module 800 according to the present embodiment may be configured in such a manner that the program is provided or distributed by way of a network such as the Internet.

The program that is executed in the short-distance wireless module 800 according to the present embodiment is configured to include each of the units (the powering-off and -on instruction unit 811, the resetting instruction unit 812, the setting transmission unit 813, the setting switch unit 814, and the like) as modular software components.

The CPU (processor) loads each of the units onto a main memory device by reading and executing the program from the recording medium described above. Accordingly, the powering-off and -on instruction unit 811, the resetting instruction unit 812, the setting transmission unit 813, the setting switch unit 814, and the like are generated in the main memory device.

While certain embodiments have been described, these embodiments have been presented by way of example only and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A wireless communication module to be attached to peripheral equipment, the peripheral equipment being used together with an information processing apparatus and being operated by electric power of which a supply is different from a supply of electric power to the information processing apparatus, the wireless communication module comprising:
a wireless communication unit (801) configured to wirelessly communicate between the information processing apparatus and the peripheral equipment;
**characterized by** further comprising:
a power source control processing (811) unit configured to transmit a control signal that causes a circuit which receives the supply of electric power to be switched from one of an open state and a closed state to the other, to the peripheral equipment, according to a request that is received from the information processing apparatus;
a storage unit configured to store a setting for the peripheral equipment, which relates to cooperation with the information processing apparatus; and
a setting transmission unit configured to transmit the setting to the peripheral equipment when introducing or replacing the peripheral equipment,
wherein the wireless communication module is to be removably attached to the peripheral equipment through a wired connection, and
wherein the information processing apparatus is a POS terminal and the peripheral equipment is a money receiving and dispensing apparatus.

2. The wireless communication module according to claim 1,
wherein the wireless communication module is a short distance wireless communication module.

3. The wireless communication module according to claim 1 or 2,
wherein the wireless communication module is configured to communicate sales data processing information to the peripheral equipment.

4. A system, comprising:
a wireless communication module according to any one of claims 1 to 3; and the peripheral equipment to which the wireless communication module is to be attached.

5. The system according to claim 4, wherein
the POS terminal has a supply of electric power different from a supply of electric power to the peripheral equipment.

6. The system according to claim 4 or 5,
wherein the wireless communication module is attached to the money receiving and dispensing apparatus that is used together with a sales data processing apparatus registering a sale of a commodity and receives and dispenses at least one of a bill and a coin according to an output signal of the sales data processing apparatus.

7. The system according to claim 6,
wherein the money receiving and dispensing apparatus is a change machine.

8. The system according to any one of claims 4 to 7,
wherein the wireless communication module is configured to communicate sales data processing information from the information processing apparatus to the peripheral equipment.

9. A wireless communication method, performed by a wireless communication module removably attached to a peripheral equipment through a wired connection, comprising:
wirelessly communicating between an information processing apparatus and the peripheral equipment, the peripheral equipment is operated by electric power of which a supply is different from a supply of electric power to the information processing apparatus;
**characterized by** further comprising:
transmitting a control signal that causes a circuit which receives the supply of electric power to be switched from one of an open state and a closed state to the other, to the peripheral equipment, according to a request that is received from the information processing apparatus;
storing a setting for the peripheral equipment, which relates to cooperation with the information processing apparatus; and
transmitting the setting to the peripheral equipment when introducing or replacing the peripheral equipment,
wherein the information processing apparatus is a POS terminal and the peripheral equipment is a money receiving and dispensing apparatus.

10. The wireless communication method according to claim 9, further comprising:
registering a sale of a commodity by a sales data processing apparatus and receiving and dispensing by the peripheral equipment at least one of a bill and a coin according to an output signal of the sales data processing apparatus.

11. The wireless communication method according to claim 9 or 10,
wherein wirelessly communicating between the information processing apparatus and the peripheral equipment comprises using short distance wireless communication methods.

12. The wireless communication method according to any one of claims 9 to 11, further comprising:
communicating sales data processing information to the peripheral equipment.

## Patentansprüche

1. Drahtloses Kommunikationsmodul zum Anbringen an Peripherieausrüstung, wobei die Peripherieausrüstung zusammen mit einer Informationsverarbeitungsvorrichtung verwendet wird und mit elektrischer Energie betrieben wird, deren Zufuhr sich von einer Zufuhr elektrischer Energie zu der Informationsverarbeitungsvorrichtung unterscheidet, das drahtlose Kommunikationsmodul umfassend:
eine drahtlose Kommunikationseinheit (801), die konfiguriert ist, um drahtlos zwischen der Informationsverarbeitungsvorrichtung und der Peripherieausrüstung zu kommunizieren;
**dadurch gekennzeichnet, dass** es ferner Folgendes umfasst:
eine Einheit zur Stromquellensteuerungsverarbeitung (811), die konfiguriert ist, um an die Peripherieausrüstung gemäß einer Anforderung, die von der Informationsverarbeitungsvorrichtung empfangen wird, ein Steuersignal zu übertragen, das bewirkt, dass eine Schaltung, die die Zufuhr von elektrischem Strom empfängt, von einem offenen Zustand oder einem geschlossenen Zustand in den anderen geschaltet wird;
eine Speichereinheit, die konfiguriert ist, um eine Einstellung für die Peripherieausrüstung zu speichern, die sich auf die Zusammenarbeit mit der Informationsverarbeitungsvorrichtung bezieht; und
eine Einstellungsübertragungseinheit, die konfiguriert ist, um die Einstellung an die Peripherieausrüstung zu übertragen, wenn die Peripherieausrüstung eingeführt oder ersetzt wird, wobei das drahtlose Kommunikationsmodul durch eine drahtgebundene Verbindung abnehmbar an der Peripherieausrüstung angebracht werden soll, und
wobei die Informationsverarbeitungsvorrichtung ein POS-Terminal und die Peripherieausrüstung eine Geldannahme- und -ausgabevorrichtung ist.

2. Drahtloses Kommunikationsmodul nach Anspruch 1,
wobei das drahtlose Kommunikationsmodul ein drahtloses Kurzstreckenkommunikationsmodul ist.

3. Drahtloses Kommunikationsmodul nach Anspruch 1 oder 2,
wobei das drahtlose Kommunikationsmodul konfiguriert ist, um Verkaufsdatenverarbeitungsinformationen an die Peripherieausrüstung zu übermitteln.

4. System, umfassend:
ein drahtloses Kommunikationsmodul nach einem der Ansprüche 1 bis 3;
und die Peripherieausrüstung, an der das drahtlose Kommunikationsmodul angebracht werden soll.

5. System nach Anspruch 4, wobei
das POS-Terminal eine Zufuhr elektrischer Energie aufweist, die sich von der Zufuhr elektrischer Energie der Peripherieausrüstung unterscheidet.

6. System nach Anspruch 4 oder 5,
wobei das drahtlose Kommunikationsmodul an der Geldannahme- und - ausgabevorrichtung angebracht ist, die zusammen mit einer Verkaufsdatenverarbeitungsvorrichtung verwendet wird, die einen Verkauf einer Ware registriert, und mindestens eines von einem Geldschein und einer Münze gemäß einem Ausgangssignal der Verkaufsdatenverarbeitungsvorrichtung empfängt und ausgibt.

7. System nach Anspruch 6,
wobei die Geldannahme- und -ausgabevorrichtung ein Wechselgeldautomat ist.

8. System nach einem der Ansprüche 4 bis 7,
wobei das drahtlose Kommunikationsmodul konfiguriert ist, um Verkaufsdatenverarbeitungsinformationen von der Informationsverarbeitungsvorrichtung an die Peripherieausrüstung zu übermitteln.

9. Drahtloses Kommunikationsverfahren, das von einem drahtlosen Kommunikationsmodul durchgeführt wird, das über eine drahtgebundene Verbindung abnehmbar an einer Peripherieausrüstung angebracht ist, umfassend:
drahtloses Kommunizieren zwischen einem Informationsverarbeitungsvorrichtung und der Peripherieausrüstung, wobei die Peripherieausrüstung mit elektrischer Energie betrieben wird, deren Zufuhr sich von der Zufuhr elektrischer Energie der Informationsverarbeitungsvorrichtung unterscheidet;
**dadurch gekennzeichnet, dass** es ferner Folgendes umfasst:
Übertragen eines Steuersignals, das bewirkt, dass eine Schaltung, die die Zufuhr von elektrischem Strom empfängt, von einem offenen Zustand oder einem geschlossenen Zustand in den anderen geschaltet wird, an die Peripherieausrüstung gemäß einer Anforderung, die von der Informationsverarbeitungsvorrichtung empfangen wird;
Speichern einer Einstellung für die Peripherieausrüstung, die sich auf die Zusammenarbeit mit der Informationsverarbeitungsvorrichtung bezieht; und
Übermitteln der Einstellung an die Peripherieausrüstung beim Einführen oder Ersetzen der Peripherieausrüstung,
wobei die Informationsverarbeitungsvorrichtung ein POS-Terminal und die Peripherieausrüstung eine Geldannahme- und -ausgabevorrichtung ist.

10. Drahtloses Kommunikationsverfahren nach Anspruch 9, ferner umfassend:
Registrieren eines Verkaufs einer Ware durch eine Verkaufsdatenverarbeitungsvorrichtung und Empfangen und Ausgeben eines Geldscheins und/oder einer Münze durch die Peripherieausrüstung gemäß einem Ausgangssignal der Verkaufsdatenverarbeitungsvorrichtung.

11. Drahtloses Kommunikationsverfahren nach Anspruch 9 oder 10, wobei ein drahtloses Kommunizieren zwischen der Informationsverarbeitungsvorrichtung und der Peripherieausrüstung unter Verwendung von drahtlosen Kurzstreckenkommunikationsverfahren erfolgt.

12. Drahtloses Kommunikationsverfahren nach einem der Ansprüche 9 bis 11, ferner umfassend:
Übermitteln von Verkaufsdatenverarbeitungsinformationen an die Peripherieausrüstung.

## Revendications

1. Module de communication sans fil devant être fixé sur un équipement périphérique, l'équipement périphérique étant utilisé conjointement avec un appareil de traitement d'informations et fonctionnant avec une énergie électrique dont l'alimentation est différente de l'alimentation en énergie électrique de l'appareil de traitement d'informations, le module de communication sans fil comprenant :
une unité de communication sans fil (801) configurée de manière à communiquer par voie hertzienne entre l'appareil de traitement d'informations et l'équipement périphérique ;
**caractérisé en ce qu'**il comprend en outre :
une unité de traitement de commande de source d'énergie (811) configurée de manière à transmettre un signal de commande qui amène un circuit qui reçoit l'alimentation en énergie électrique à être commuté de l'un d'un état ouvert et d'un état fermé à l'autre, à l'équipement périphérique, selon une demande qui est reçue en provenance de l'appareil de traitement d'informations ;
une unité de stockage configurée de manière à stocker un réglage pour l'équipement périphérique, lequel se rapporte à la coopération avec l'appareil de traitement d'informations ; et
une unité de transmission de réglage configurée de manière à transmettre le réglage à l'équipement périphérique lors de l'introduction ou du remplacement de l'équipement périphérique ;
dans lequel le module de communication sans fil doit être fixé de manière amovible à l'équipement périphérique par le biais d'une connexion filaire ; et
dans lequel l'appareil de traitement d'informations est un terminal de point de vente, POS, et l'équipement périphérique est un appareil de réception et de distribution d'argent.

2. Module de communication sans fil selon la revendication 1,
dans lequel le module de communication sans fil est un module de communication sans fil à courte distance.

3. Module de communication sans fil selon la revendication 1 ou 2,
dans lequel le module de communication sans fil est configuré de manière à communiquer des informations de traitement de données de vente à l'équipement périphérique.

4. Système, comprenant :
un module de communication sans fil selon l'une quelconque des revendications 1 à 3 ; et
l'équipement périphérique auquel le module de communication sans fil doit être fixé.

5. Système selon la revendication 4, dans lequel :
le terminal de point de vente, POS, présente une alimentation en énergie électrique différente d'une alimentation en énergie électrique de l'équipement périphérique.

6. Système selon la revendication 4 ou 5,
dans lequel le module de communication sans fil est fixé à l'appareil de réception et de distribution d'argent qui est utilisé conjointement avec un appareil de traitement de données de vente qui enregistre la vente d'une marchandise, et reçoit et distribue au moins un billet et une pièce de monnaie selon un signal de sortie de l'appareil de traitement de données de vente.

7. Système selon la revendication 6,
dans lequel l'appareil de réception et de distribution d'argent est un monnayeur.

8. Système selon l'une quelconque des revendications 4 à 7,
dans lequel le module de communication sans fil est configuré de manière à communiquer des informations de traitement de données de vente, de l'appareil de traitement d'informations à l'équipement périphérique.

9. Procédé de communication sans fil, mis en oeuvre par un module de communication sans fil fixé de manière amovible à un équipement périphérique par le biais d'une connexion filaire, comprenant le fait de :
communiquer par voie hertzienne entre un appareil de traitement d'informations et l'équipement périphérique, l'équipement périphérique fonctionnant avec une énergie électrique dont l'alimentation est différente de l'alimentation en énergie électrique de l'appareil de traitement d'informations ;
**caractérisé en ce qu'**il comprend en outre le fait de :
transmettre un signal de commande qui amène un circuit qui reçoit l'alimentation en énergie électrique à être commuté de l'un d'un état ouvert et d'un état fermé à l'autre, à l'équipement périphérique, selon une demande qui est reçue en provenance de l'appareil de traitement d'informations ; et
stocker un réglage pour l'équipement périphérique, lequel se rapporte à la coopération avec l'appareil de traitement d'informations ; et
transmettre le réglage à l'équipement périphérique lors de l'introduction ou du remplacement de l'équipement périphérique ;
dans lequel l'appareil de traitement d'informations est un terminal de point de vente, POS, et l'équipement périphérique est un appareil de réception et de distribution d'argent.

10. Procédé de communication sans fil selon la revendication 9, comprenant en outre le fait de :
enregistrer la vente d'une marchandise par le biais d'un appareil de traitement de données de vente, et recevoir et distribuer, par le biais de l'équipement périphérique, au moins un billet et une pièce de monnaie selon un signal de sortie de l'appareil de traitement de données de vente.

11. Procédé de communication sans fil selon la revendication 9 ou 10,
dans lequel la communication par voie hertzienne entre l'appareil de traitement d'informations et l'équipement périphérique comprend l'utilisation de procédés de communication sans fil à courte distance.

12. Procédé de communication sans fil selon l'une quelconque des revendications 9 à 11, comprenant en outre le fait de :
communiquer des informations de traitement de données de vente à l'équipement périphérique.
